# EUROPEAN PATENT APPLICATION

(11) **EP 4 841 419 A1**
(43) Date of publication of application: **18.11.2026**
(21) Application number: 26178680.0
(22) Date of filing: 13.05.2026
(51) Int. Cl.: G06F 3/06

(54) **STORAGE DEVICE INCLUDING CIRCUITRY FOR MERGING QUEUES**

(30) Priority: 14.05.2025 KR 20250062848; 09.12.2025 KR 20250194205
(71) Applicant: Samsung Electronics Co., Ltd., Suwon-si, Gyeonggi-do 16677 (KR)
(72) Inventor: KIM, Suhyun, 16677 Suwon-si (KR); JEONG, Youngseok, 16677 Suwon-si (KR); SONG, Seunghwan, 16677 Suwon-si (KR); KIM, Yoonjung, 16677 Suwon-si (KR); KIM, Wandong, 16677 Suwon-si (KR)
(74) Representative: Marks & Clerk LLP

(57) **Abstract**

A storage device includes non-volatile memory and a controller, including a command queue circuit storing a plurality of queues respectively corresponding to commands received from a host, a queue manager circuit configured to, based on physical addresses of the plurality of queues, select a first queue corresponding to a first physical address and a second queue corresponding to a second physical address, and merge the second queue into the first queue, and a non-volatile memory interface circuit configured to sequentially transmit, to the non-volatile memory, a first queuing command corresponding to the first queue, a second queuing command corresponding to the second queue, and a merge command corresponding to the first and second queues. In response to the merge command, the non-volatile memory is configured to concurrently perform a first memory operation corresponding to the first physical address and a second memory operation corresponding to the second physical address.

## Description

### BACKGROUND

### Technical Field

The disclosure relates to a memory device, and more particularly, to a non-volatile memory, a controller, and a storage device supporting a command queuing operation.

### Related Art

In semiconductor memory devices, efficient command processing structures are required for high-speed data processing. Generally, memory devices primarily process commands sequentially input from the outside or process commands by storing the commands in a simple internal buffer. However, in non-volatile memory such as NAND flash memory, program operations, read operations, and erase operations involve complex timing and dependencies. Therefore, there are limitations to performance optimization by relying only on a simple sequential processing scheme. Therefore, technology capable of enhancing command processing performance while efficiently utilizing resources in memory devices is required.

### SUMMARY

According to an aspect of the disclosure, there is provided a storage device including non-volatile memory, and a controller configured to control the non-volatile memory, wherein the controller includes a command queue circuit configured to store a plurality of queues respectively corresponding to a plurality of commands received from a host, a queue manager circuit configured to, based on physical addresses of the plurality of queues, select a first queue corresponding to a first physical address and a second queue corresponding to a second physical address, and merge the second queue into the first queue, and a non-volatile memory interface circuit configured to sequentially transmit, to the non-volatile memory, a first queuing command corresponding to the first queue, a second queuing command corresponding to the second queue, and a merge command corresponding to the first and second queues, and wherein the non-volatile memory is configured to, in response to the merge command, concurrently perform a first memory operation corresponding to the first physical address and a second memory operation corresponding to the second physical address.

According to another aspect of the disclosure, there is provided a controller including a command queue circuit configured to store a plurality of queues respectively corresponding to a plurality of commands received from a host, a queue manager configured to, based on physical addresses of the plurality of queues, merge a first queue and a second queue, and set the first queue as a representative queue, and to release the second queue from the command queue, and a host interface circuit configured to, based on a release operation of releasing the second queue from the command queue circuit, transmit a request for an additional command to the host, and subsequently to receive the additional command from the host, wherein the command queue circuit is configured to further store the additional command received from the host.

According to another aspect of the disclosure, there is provided a non-volatile memory device including a memory cell array including a plurality of planes, each of the plurality of planes including a plurality of memory cells, an input/output circuit configured to sequentially receive, from a controller, a first queuing command corresponding to a first queue for a first physical address, a second queuing command corresponding to a second queue for a second physical address, and a merge command corresponding to the first and second queues, and a control logic circuit including an internal queue circuit configured to store a first command and a second command, wherein the first command corresponds to the first queuing command, and the second command corresponds to the second queuing command, wherein the control logic circuit is configured to control the memory cell array in response to the merge command such that the non-volatile memory device concurrently performs a first memory operation, corresponding to the first command, on the first physical address and a second memory operation, corresponding to the second command, on the second physical address.

At least some of the above and other features of the invention are set out in the claims.

### BRIEF DESCRIPTION OF THE DRAWINGS

Embodiments will be more clearly understood from the following detailed description taken in conjunction with the accompanying drawings in which:
FIG. 1 is a block diagram showing a storage device according to embodiments;
FIG. 2 is a block diagram showing a memory device including first to fourth planes, according to embodiments;
FIG. 3 is a block diagram showing a memory device according to embodiments in more detail;
FIG. 4 illustrates a command merging operation according to embodiments;
FIG. 5 illustrates an additional queue update operation according to embodiments;
FIG. 6 is a timing diagram illustrating a command queuing operation and a merge execution operation, according to embodiments;
FIG. 7 is a block diagram showing a storage device according to embodiments;
FIG. 8 is a block diagram illustrating the configuration of a memory controller according to embodiments;
FIG. 9 illustrates the operation of a memory controller according to embodiments;
FIG. 10 shows a running queue and an enqueued queue, according to embodiments;
FIG. 11 illustrates a read operation utilizing command queuing and merge execution, according to embodiments;
FIG. 12 illustrates a program operation utilizing command queuing and merge execution, according to embodiments;
FIG. 13 is a flowchart illustrating operation between a host and a storage device, according to embodiments;
FIG. 14 is a flowchart illustrating operations between a memory controller and a non-volatile memory, according to embodiments;
FIG. 15 is a flowchart illustrating an operating method of a storage device, according to embodiments; and
FIG. 16 is a block diagram illustrating a system according to embodiments.

### DETAILED DESCRIPTION

The disclosure provides a storage device, a controller, and a non-volatile memory device with enhanced performance through command queuing operations.

Hereinafter, embodiments are described in detail with reference to the accompanying drawings. The same reference numerals are given to the same elements in the drawings, and repeated descriptions thereof are omitted.

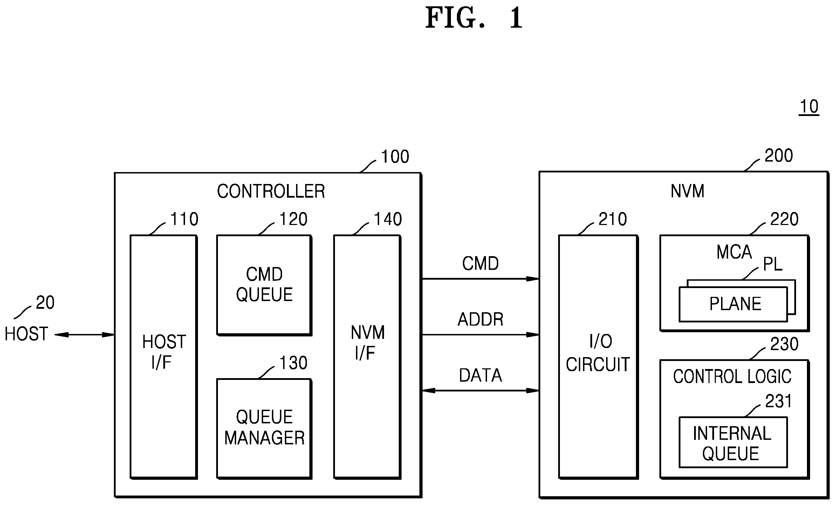

FIG. 1 is a block diagram showing a storage device 10 according to embodiments.

Referring to FIG. 1, the storage device 10 may include a controller 100 and non-volatile memory 200. In response to a request or command received from a host 20, the controller 100 may control the non-volatile memory 200 such that data stored in the non-volatile memory 200 is read or data is programmed into the non-volatile memory 200. According to embodiments, the controller 100 may be referred to as a memory controller or a storage controller. According to embodiments, the storage device 10 may be referred to as a memory system.

The controller 100 may include a command queue circuit 120, and the command queue circuit 120 may enqueue or store commands sequentially received from the host 20. The non-volatile memory 200 may include an internal queue circuit 231, and the internal queue circuit 231 may enqueue or store commands sequentially received from the controller 100. The controller 100 may utilize a command queuing function of the non-volatile memory 200 to merge a plurality of commands stored in the command queue circuit 120 and remove or release the merged command from the command queue circuit 120.

Consequently, the lifetime of each queue in the command queue circuit 120 may be reduced, and the number of queues that operate concurrently per unit time may be increased. As a result, bank collisions for the non-volatile memory 200 may be reduced, and the performance of the storage device 10 may be improved. Hereinafter, the configuration and operation of the controller 100 and the non-volatile memory 200 are described in detail.

The controller 100 may include a host interface circuit 110, the command queue circuit 120, a queue manager circuit 130, and a non-volatile memory interface circuit 140. The host interface circuit 110 may sequentially receive a plurality of requests or a plurality of commands from the host 20. For example, the host interface circuit 110 may transmit packets to and receive packets from the host 20. The packets transmitted from the host 20 to the host interface circuit 110 may include commands or data to be written to the non-volatile memory 200, and the packets transmitted from the host interface circuit 110 to the host 20 may include responses to commands or data read from the non-volatile memory 200. Example commands include memory commands such as program operations, read operations, write operations, and erase operations.

The command queue circuit 120 may receive a plurality of commands from the host interface circuit 110 and store a plurality of queues respectively corresponding to the received plurality of commands. The queue manager circuit 130 may select at least two queues based on the physical addresses of the plurality of queues stored in the command queue circuit 120, and may merge the selected at least two queues. Also, the queue manager circuit 130 may release the merged queue from the command queue circuit 120 based on a merge operation, and thus, command queue resources may be secured.

In embodiments, the queue manager circuit 130 may merge queues having physical addresses corresponding to the same bank. In some embodiments, the bank may correspond to a chip, a die, a logical unit number (LUN), or a plane. For example, each chip may include one or more dies, each die may include one or more LUNs, and each LUN may include one or more planes. Herein, the LUN may refer to the minimum logical unit for which the controller 100 may independently execute commands. For example, the controller 100 may schedule a program operation, a read operation, or an erase operation on a per-LUN basis.

In embodiments, the queue manager circuit 130 may select queues having target addresses that are operated concurrently, and may merge at least one selected queue into a representative queue. For example, the queue manager circuit 130 may select a first queue corresponding to a first physical address and a second queue corresponding to a second physical address from the command queue circuit 120, and may merge the second queue into the first queue. Additionally, the queue manager circuit 130 may release the second queue from the command queue circuit 120 based on the merge operation that merges the second queue into the first queue, and thus, the command queue resources may be secured. As used herein, the first queue may be referred to as the "representative queue," and the second queue may be referred to as the "merged queue."

The non-volatile memory interface circuit 140 may transmit data to be programmed into the non-volatile memory 200 to the non-volatile memory 200, or receive data read from the non-volatile memory 200. For example, the non-volatile memory interface circuit 140 may transmit a command CMD and an address ADDR to the non-volatile memory 200 to instruct memory operations, such as a read operation, a program operation, or an erase operation, and may transmit data DATA to and receive data DATA from the non-volatile memory 200. The non-volatile memory interface circuit 140 may be implemented to comply with standard regulations, such as Toggle and open-NAND flash interface (ONFI).

In embodiments, the non-volatile memory interface circuit 140 may sequentially transmit, to the non-volatile memory 200, a first queuing command corresponding to the first queue, a second queuing command corresponding to the second queue, and a queue execution command or a merge command corresponding to the first and second queues. For example, the queue execution command or merge command may be transmitted after transmitting the first queuing command and the second queuing command. In embodiments, the host interface circuit 110 may transmit a request for an additional command to the host 20 based on a release operation that releases the second queue from the command queue circuit 120.

The non-volatile memory 200 may include an input/output circuit 210, a memory cell array 220, and a control logic circuit 230. The control logic circuit 230 may include the internal queue circuit 231, and the internal queue circuit 231 may store commands sequentially received from the controller 100. However, the disclosure is not limited thereto, and in some embodiments, the internal queue circuit 231 may be located outside the control logic circuit 230. Also, in some embodiments, the internal queue circuit 231 may be included in the input/output circuit 210.

The input/output circuit 210 may sequentially receive, from the controller 100, the first queuing command corresponding to the first queue for the first physical address, the second queuing command corresponding to the second queue for the second physical address, and the queue execution command or merge command corresponding to the first and second queues. The memory cell array 220 may include a plurality of planes PL, and each of the plurality of planes PL may include a plurality of memory cells.

The internal queue circuit 231 may enqueue or store the plurality of commands sequentially received from the controller 100. According to embodiments, the internal queue circuit 231 may be referred to as a command queue or an on-chip queue. In embodiments, the internal queue circuit 231 may enqueue or store the first command corresponding to the first queuing command and the second command corresponding to the second queuing command. In response to the queue execution command or the merge command, the control logic circuit 230 may control the memory cell array 220 such that first and second memory operations corresponding to the first and second commands are performed concurrently on the first and second physical addresses, respectively.

However, the disclosure is not limited thereto, and even when no merge command is received, the control logic circuit 230 may control the memory cell array 220 such that the first and second memory operations corresponding to the first and second commands are performed on the first and second physical addresses, respectively. For example, the control logic circuit 230 may include a queue manager circuit, and the queue manager circuit may merge commands enqueued in the internal queue circuit 231. Accordingly, the control logic circuit 230 may initiate operations corresponding to the commands enqueued in the internal queue circuit 231. In addition, for example, the control logic circuit 230 may periodically perform queue execution operations. For example, the control logic circuit 230 may periodically perform memory operations corresponding to commands enqueued in the internal queue circuit 231.

In embodiments, the first and second commands correspond to read commands, and the control logic circuit 230 may concurrently perform read operations on the first and second physical addresses in response to the queue execution command or the merge command. In embodiments, the first and second commands correspond to program commands, and the control logic circuit 230 may concurrently perform program operations on the first and second physical addresses in response to the queue execution command or the merge command. In embodiments, the first and second physical addresses may correspond to the same plane, the same block, and the same page.

In embodiments, the control logic circuit 230 may activate a queue mode or a queuing mode based on a set feature command received from the controller 100. In this specification, the terms "queue mode" and "queuing mode" have substantially the same meaning and may be used interchangeably. For example, the set feature command may include a setting value to enable the command queuing function of the control logic circuit 230. In embodiments, the control logic circuit 230 may receive, from the controller 100, an individual command indicating the queue mode.

In embodiments, when the queue mode is activated, the control logic circuit 230 may store a user command received from the controller 100 into the internal queue circuit 231 and may not immediately execute the memory operation corresponding to the user command. Therefore, the user command may act as a queuing command. In embodiments, based on the queue execution command or the merge command received from the controller 100, the control logic circuit 230 may merge the commands enqueued in the internal queue circuit 231 and perform memory operations according to the merged command. In embodiments, the controller 100 may periodically issue the queue execution commands and may periodically transmit the queue execution commands to the non-volatile memory 200.

In the non-volatile memory 200, each bank may process only one command at a time. Therefore, when different commands concurrently request the same bank, a bank collision may occur. When the bank collision occurs, subsequent commands have to wait until the preceding command completes. As a result, command wait time increases, and overall operation latency becomes greater. This accumulation of wait times may act as a primary cause limiting the input/output per second (IOPS) and throughput of the storage device 10.

However, the controller 100 according to the disclosure may sequentially transmit queuing commands for enqueuing commands as physical operation units in a busy period of the non-volatile memory 200, and may transmit the merge command for instructing the execution of the enqueued commands in a ready period of the non-volatile memory 200, thereby processing a plurality of commands as a single execution unit. In this case, the commands input at different points in time may be grouped together and executed as a single bank unit, thereby preventing access to the same bank from being temporally spread out. That is, since commands for the same bank may be processed in a concentrated execution manner by the command queuing operation and the merge operation, bank collisions occurring due to commands arriving at spread out points in time may be effectively mitigated. As a result, unnecessary wait times caused by bank collisions are significantly reduced, and the effective utilization time of the non-volatile memory 200 increases, thereby improving the overall IOPS and throughput.

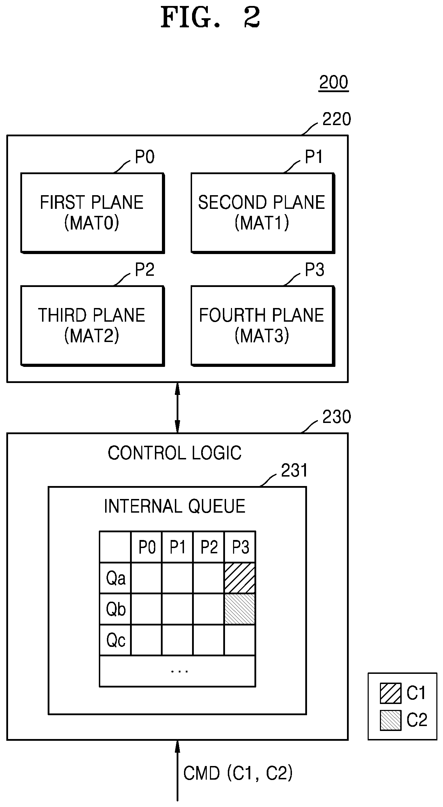

FIG. 2 is a block diagram showing the non-volatile memory 200 including first to fourth planes P0 to P3 according to embodiments.

Referring to FIGS. 1 and 2 together, the memory cell array 220 may include the first to fourth planes P0 to P3. For example, the first to fourth planes P0 to P3 may correspond to first to fourth memory array tiles MAT0 to MAT3, respectively. However, the disclosure is not limited thereto, and the number of planes included in the memory cell array 220 may vary according to embodiments.

The control logic circuit 230 may sequentially receive a plurality of commands, including a first command C1 and a second command C2, from the controller 100. For example, the first command C1 may be a read command or a program command corresponding to the fourth plane P3. For example, the second command C2 may be a read command or a program command corresponding to the fourth plane P3.

The internal queue circuit 231 may store the first command C1 in a first queue Qa in response to the first queuing command, and store the second command C2 in a second queue Qb in response to the second queuing command. In response to the queue execution command or the merge command, the control logic circuit 230 may merge the first and second queues Qa and Qb and concurrently perform the memory operation corresponding to the fourth plane P3.

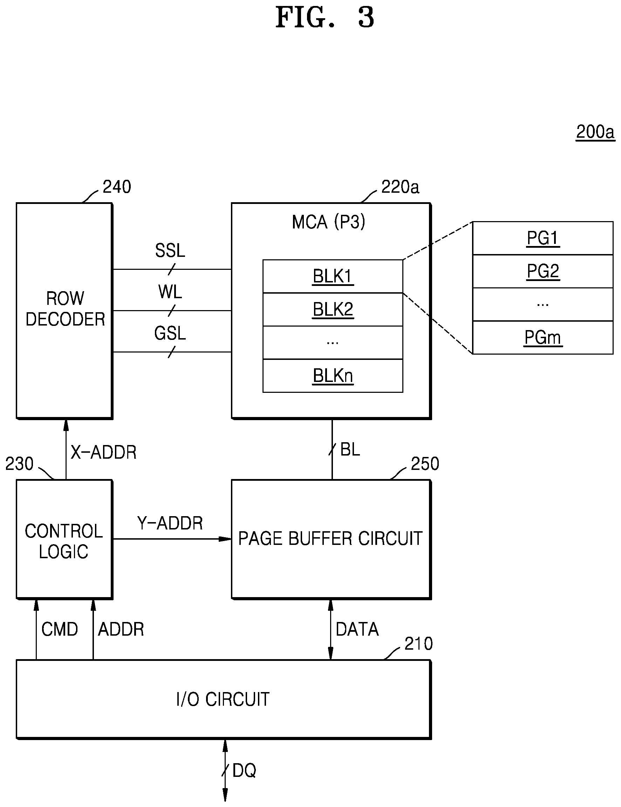

FIG. 3 is a block diagram showing a non-volatile memory 200a according to embodiments in more detail.

Referring to FIG. 3, the non-volatile memory 200a may include an input/output circuit 210, a memory cell array 220a, a control logic circuit 230, a row decoder 240, and a page buffer circuit 250. For example, the non-volatile memory 200a may correspond to an example of the non-volatile memory 200 shown in FIGS. 1 and 2. Hereinafter, the components of the non-volatile memory 200a is described with reference to FIGS. 1 and 3 together. The input/output circuit 210 may provide a command CMD and an address ADDR received from the controller 100 to the control logic circuit 230, and may provide data DATA to the page buffer circuit 250.

In embodiments, the command CMD, the address ADDR, and the data DATA may be transmitted via a data signal DQ, and the data signal DQ may be synchronized with a data strobe signal and transmitted via a data signal line. However, the disclosure is not limited thereto, and in some embodiments, the controller 100 and the non-volatile memory 200a may communicate using a separate command address (SCA) method in which the command CMD and the address ADDR are transmitted separately from the data DATA. For example, the command CMD and the address ADDR may be synchronized with command/address clock signals and transmitted via command/address signal lines, and the data DATA may be synchronized with a data strobe signal and transmitted via a data signal line.

For example, the memory cell array 220a may include the fourth plane P3, and the fourth plane P3 may include a plurality of memory blocks BLK1 to BLKn, where n is a natural number. Each memory block, for example, the memory block BLK1, may include a plurality of pages PG1 to PGm, where m is a natural number. For example, the memory block may be the unit of erase, and the page may be the unit of program and read. The memory cell array 220a may be connected to the row decoder 240 via word lines WL, string select lines SSL, and ground select lines GSL, and may be connected to the page buffer circuit 250 via bit lines BL. The description of the fourth plane P3 may also apply to the first through third planes P0 to P2.

For example, the memory cells included in the memory cell array 220a may be NAND flash memory cells. However, the disclosure is not limited thereto, and in some embodiments, the memory cells may also include a magnetic RAM (MRAM), a spin-transfer torque MRAM (STT-MRAM), a conductive bridging RAM (CBRAM), a ferroelectric RAM (FeRAM), a phase RAM (PRAM), a resistive RAM (RRAM), and other various types of memories.

In some embodiments, the memory cell array 220a may include a three-dimensional (3D) memory cell array, and the 3D memory cell array may include a plurality of NAND strings. Each of the NAND strings may include memory cells respectively connected to word lines vertically stacked on a substrate. The disclosures of US Patent Nos. 7,679,133, 8,553,466, 8,654,587, and 8,559,235 and US Application Publication No. 2011/0233648 are referred to in this respect. In some embodiments, the memory cell array 220a may include a two-dimensional (2D) memory cell array, and the 2D memory cell array may include a plurality of NAND strings arranged in row and column directions.

The control logic circuit 230 may control all various operations in the non-volatile memory 200a. Specifically, the control logic circuit 230 may be configured to control memory operations for a plurality of memory cells included in the memory cell array 220a. For example, the memory operation may include at least one of a program operation, a read operation, and an erase operation. In some embodiments, the control logic circuit 230 may receive the command CMD and the address ADDR from the input/output circuit 210, and in response to the received command CMD and address ADDR, may output various control signals, for example, a row address X_ADDR and a column address Y_ADDR.

In the embodiment, the control logic circuit 230 may perform on-chip command queuing, thereby enhancing the performance of the non-volatile memory 200a. Specifically, the control logic circuit 230 may enqueue commands in response to the queuing command, and may concurrently perform memory operations corresponding to the plurality of enqueued commands in response to the queue execution command or the merge command. Consequently, even in random workload environments, the utilization of overall plane resources may increase, thereby improving the core throughput of the non-volatile memory 200a.

In response to the row address X_ADDR, the row decoder 240 may select one of the plurality of word lines WL and may select one of the plurality of string select lines SSL. The page buffer circuit 250 may include a plurality of page buffers, and the plurality of page buffers may be respectively connected to memory cells via the plurality of bit lines BL. The page buffer circuit 250 may select at least one bit line among the plurality of bit lines BL in response to the column address Y_ADDR. The page buffer circuit 250 may operate as a write driver or a sensing amplifier depending on an operating mode.

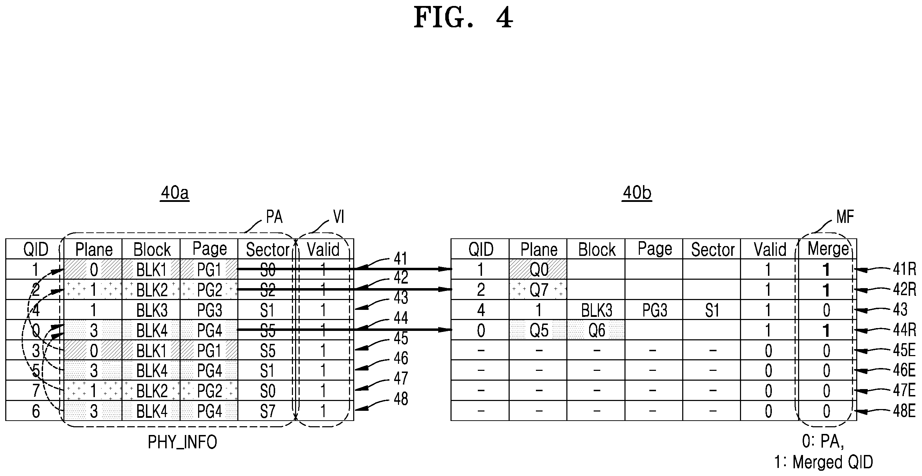

FIG. 4 illustrates a command merging operation according to embodiments.

Referring to FIGS. 1 and 4 together, the queue manager circuit 130 may perform a command merging operation for merging some queues from among a plurality of queues stored in the command queue circuit 120, thereby generating a merged resource 40b from an original resource 40a. For example, when the maximum queue depth of the command queue circuit 120 is 8, the command queue circuit 120 may store up to 8 queues. The maximum queue depth of the command queue circuit 120 may vary according to embodiments. The queue manager circuit 130 may perform the command merging operation to release some queues from the command queue circuit 120, thereby securing command queue resources. For example, when four queues are released from the command queue circuit 120, four command queue resources may be secured in the command queue circuit 120. Hereinafter, the command merging operation is described in detail.

The command queue circuit 120 may store a plurality of queues 41 to 48 based on a plurality of commands received from the host 20, and the plurality of queues 41 to 48 may constitute the original resource 40a. In embodiments, the command queue circuit 120 may store a physical address PA and valid information VI corresponding to a queue ID QID. For example, the physical address PA may include a physical page number (PPN) that includes plane information, block information, page information, and sector information corresponding to the queue ID QID. For example, the valid information VI may include a valid flag Valid indicating whether the corresponding queue is valid.

The queue manager circuit 130 may select at least two queues based on the physical addresses PA of the plurality of queues 41 to 48 stored in the command queue circuit 120, and generate the merged resource 40b by merging the selected at least two queues. For example, the queue manager circuit 130 may select the queues 41 and 45, and merge the queue 45 into the queue 41 to generate a representative queue 41R. For example, the queue manager circuit 130 may select the queues 42 and 47, and merge the queue 47 into the queue 42 to generate a representative queue 42R. For example, the queue manager circuit 130 may select the queues 44, 46, and 48, and merge the queues 46 and 48 into the queue 44 to generate a representative queue 44R.

For example, the physical address corresponding to the queue 41 having QID1 may be Plane 0, BLK1, PG1, and S0, and the physical address corresponding to the queue 45 having QID3 may be Plane 0, BLK1, PG1, and S5. In this case, the physical addresses corresponding to the queues 41 and 45 share the same plane, the same block, and the same page, and thus, concurrent operations may be possible. Therefore, the queue manager circuit 130 may select the queues 41 and 45, and merge the queue 45 into the queue 41 to generate the representative queue 41R. In this case, the queue manager circuit 130 may release the merged queue 45 from the command queue circuit 120, and thus, a command queue resource 45E may be secured. The valid flag for the secured command queue resource 45E may be set to 0.

For example, the physical address corresponding to the queue 42 having QID2 may be Plane 1, BLK2, PG2, and S2, and the physical address corresponding to the queue 47 having QID7 may be Plane 1, BLK2, PG2, and S0. In this case, the physical addresses corresponding to the queues 42 and 47 share the same plane, the same block, and the same page, and thus, concurrent operations may be possible. Therefore, the queue manager circuit 130 may select the queues 42 and 47, and merge the queue 47 into the queue 42 to generate the representative queue 42R. In this case, the queue manager circuit 130 may release the merged queue 47 from the command queue circuit 120, and thus, a command queue resource 47E may be secured. The valid flag for the secured command queue resource 47E may be set to 0.

For example, the physical address corresponding to the queue 44 having QID0 may be Plane 3, BLK4, PG4, and S5, the physical address corresponding to the queue 46 having QID5 may be Plane 3, BLK4, PG4, and S1, and the physical address corresponding to the queue 48 having QID6 may be Plane 3, BLK4, PG4, and S7. In this case, the physical addresses corresponding to the queues 44, 46, and 48 share the same plane, the same block, and the same page, and thus, concurrent operations may be possible. Therefore, the queue manager circuit 130 may select the queues 44, 46, and 48, and merge the queues 46 and 48 into the queue 44 to generate the representative queue 44R. In this case, the queue manager circuit 130 may release the merged queues 46 and 48 from the command queue circuit 120, and thus, command queue resources 46E and 48E may be secured. The valid flags for the secured command queue resources 46E and 48E may be set to 0.

The queue manager circuit 130 may update or generate a merge flag MF based on the command merging operation and store the merge flag MF in the command queue circuit 120. In the queue manager circuit 130, the merge flag MF of each of the representative queues 41R, 42R, and 44R on which the command merging operation has been performed may be set to a first value (e.g., 1). Accordingly, when the merge flag MF is set to 1, each of the representative queues 41R, 42R, and 44R may include at least one merged queue ID QID. For example, the representative queue 41R may include Q0 having QID0, the representative queue 42R may include Q7 having QID7, and the representative queue 44R may include Q5 having QID5 and Q6 having QID6.

Also, in the queue manager circuit 130, the merge flag MF of the queue 43, which is a regular queue on which the command merging operation has not been performed, may be set to a second value (e.g., 0) different from the first value. Accordingly, when the merge flag MF is 0, the queue 43, i.e., the general queue, may store the physical address PA corresponding to the queue ID QID. For example, the queue 43 may include Plane 1, BLK3, PG3, and S1, which are the physical addresses corresponding to QID4.

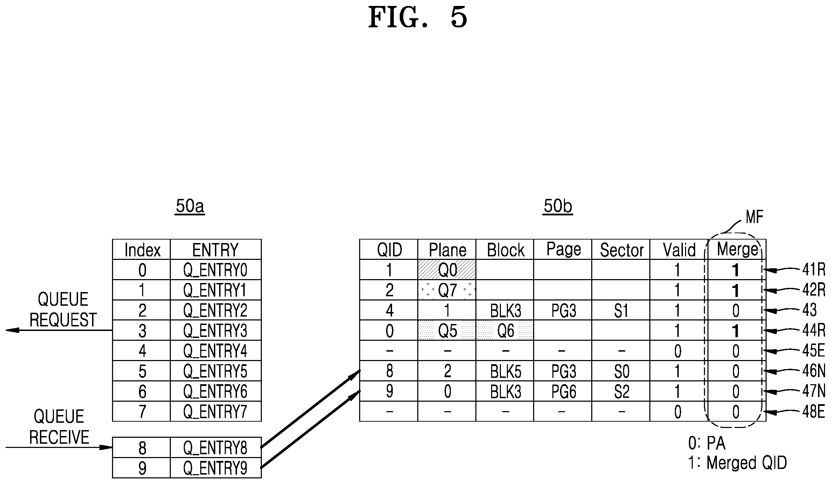

FIG. 5 illustrates an additional queue update operation according to embodiments.

Referring to FIGS. 1 and 5 together, the host interface circuit 110 may generate a queue entry table 50a based on a plurality of requests or a plurality of commands sequentially received from the host 20. Specifically, the host interface circuit 110 may register a request or command received from the host 20 as a queue entry and assign a queue ID QID. For example, the queue entry table 50a may be implemented as a linked list queue. For example, a linked list queue may include an index representing the queue entry number, a previous pointer indicating the previous entry in the linked list, a next pointer indicating the next entry in the linked list, and a queue ID QID representing the number of the command to which the corresponding entry belongs.

The host 20 may transmit a plurality of commands based on the maximum queue depth of the command queue circuit 120, and the host interface circuit 110 may generate the queue entry table 50a including a plurality of queue entries Q_ENTRY0 to Q_ENTRY7 based on the plurality of commands. When the command queue resource is secured according to the command merging operation, the controller 100 may request additional commands to the host 20 and subsequently receive additional commands from the host 20.

For example, the host interface circuit 110 may update the queue entry table 50a with additional queue entries Q_ENTRY8 and Q_ENTRY9 corresponding to additional commands received from the host 20. The queue manager circuit 130 may store new queues 46N and 47N in the allocated command queue resources based on the additional queue entries Q_ENTRY8 and Q_ENTRY9 received from the host interface circuit 110. Accordingly, the queue manager circuit 130 may generate an updated resource 50b by updating the command queue circuit 120 with the additional queues.

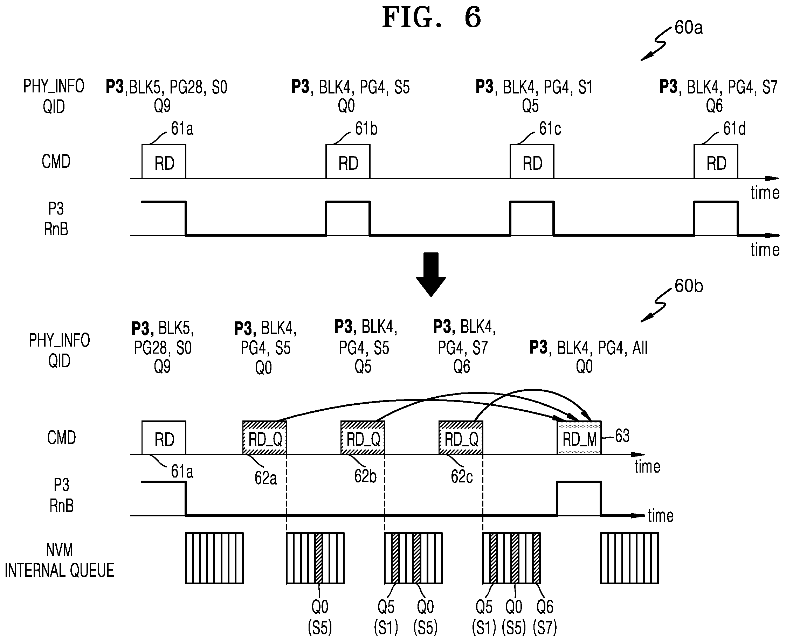

FIG. 6 is a timing diagram illustrating a command queuing operation and a merge execution operation according to embodiments.

Referring to FIGS. 1, 4, and 6 together, in a comparative example 60a in which the command queuing operation and the merge execution operation of a non-volatile memory are not used, a controller may transmit a normal read command only during the ready period of the non-volatile memory based on a ready/busy signal RnB from the non-volatile memory. For example, the controller may sequentially transmit, to the non-volatile memory, a normal read command 61a corresponding to a queue Q9, a normal read command 61b corresponding to a queue Q0, a normal read command 61c corresponding to a queue Q5, and a normal read command 61d corresponding to a queue Q6.

On the other hand, according to embodiments, the storage device 10 may perform the command queuing operation and the merge execution operation of the non-volatile memory 200. Specifically, the controller 100 may determine that memory operations corresponding to the queues Q0, Q5, and Q6 may be performed concurrently, based on the fact that the physical addresses of the queues Q0, Q5, and Q6 correspond to the same plane, the same block, and the same page. Accordingly, the controller 100 may sequentially transmit, to the non-volatile memory 200, a first queuing command 62a corresponding to the queue Q0, a second queuing command 62b corresponding to the queue Q5, and a third queuing command 62c corresponding to the queue Q6. In this case, the controller 100 may transmit the first to third queuing commands 62a to 62c to the non-volatile memory 200 during the busy period of the non-volatile memory 200.

The non-volatile memory 200 may store the queues Q0, Q5, and Q6 in the internal queue circuit 231 in response to the first to third queuing commands 62a to 62c. For example, each page may include first to eighth sectors. For example, each page may correspond to 4 KB, and each sector may correspond to 512 B. The non-volatile memory 200 may enqueue, in the internal queue circuit 231, a queue Q0 corresponding to a sixth sector S5 of a fourth plane P3, BLK4, and PG4, a queue Q5 corresponding to a second sector S1 of the fourth plane P3, BLK4, and PG4, and a queue Q6 corresponding to an eighth sector S7 of the fourth plane P3, BLK4, and PG4.

Subsequently, the controller 100 may transmit a merge command 63 corresponding to the queues Q0, Q5, and Q6 to the non-volatile memory 200. In this case, the controller 100 may transmit the merge command 63 to the non-volatile memory 200 during the ready period of the non-volatile memory 200. The merge command 63 may correspond to a queue execution command that instructs the execution of memory operations corresponding to the queues Q0, Q5, and Q6. The non-volatile memory 200 may concurrently perform the memory operations corresponding to the queues Q0, Q5, and Q6 in response to the merge command 63, and may release the queues Q0, Q5, and Q6 from the internal queue circuit 231. For example, the non-volatile memory 200 may concurrently perform read operations on the fourth plane P3, BLK4, and PG4.

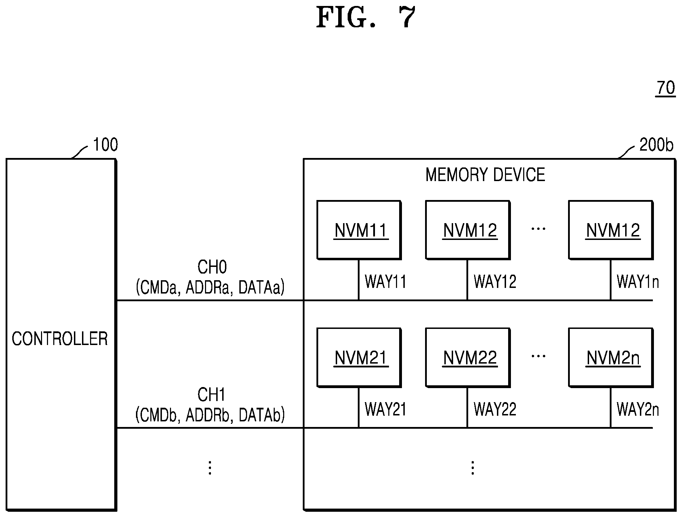

FIG. 7 is a block diagram showing a storage device 70 according to embodiments.

Referring to FIG. 7, the storage device 70 may include a memory device 200b and the controller 100. The storage device 70 may support a plurality of channels, including a first channel CH0 and a second channel CH1. The memory device 200b may include a plurality of non-volatile memories NVM11 to NVM2n (where n is a positive integer), and may be thus referred to as a "non-volatile memory device." In the memory device 200b, the non-volatile memories NVM11 to NVM1n may be connected to the first channel CH0 via ways WAY11 to WAY1n, and the non-volatile memories NVM21 to NVM2n may be connected to the second channel CH1 via ways WAY21 to WAY2n. For example, each of the plurality of non-volatile memories NVM11 to NVM2n may be implemented as a chip or die, but the disclosure is not limited thereto.

In embodiments, the non-volatile memories NVM11 to NVM1n may be vertically stacked to form a first stack, and the non-volatile memories NVM21 to NVM2n may be vertically stacked to form a second stack. In embodiments, the first stack and the second stack may be stacked over each other in a vertical direction. For example, the second stack may be disposed above the first stack and electrically connected thereto via a through-silicon via (TSV) structure. However, the disclosure is not limited thereto, and in some embodiments, the first stack and the second stack may be arranged in a horizontal direction.

The controller 100 may select, via each of the channels, one of the non-volatile memories connected to that channel, and may transmit signals to and receive signals from the selected non-volatile memory. For example, the controller 100 may select the non-volatile memory NVM11 from among the non-volatile memories NVM11 to NVM1n connected to the first channel CH0. The controller 100 may transmit a command CMDa, an address ADDRa, and data DATAa to the selected non-volatile memory NVM11 via the first channel CH0, or may receive the data DATAa from the selected non-volatile memory NVM11.

Also, the controller 100 may transmit signals to and receive signals from the memory device 200b in parallel via different channels. For example, the controller 100 may transmit the command CMDb to the memory device 200b via the second channel CH1 while transmitting the command CMDa to the memory device 200b via the first channel CH0. For example, the controller 100 may receive the data DATAb from the memory device 200b via the second channel CH1 while receiving the data DATAa from the memory device 200b via the first channel CH0.

Also, the controller 100 may enhance the parallelism of data access to non-volatile memories connected to ways assigned to respective channels by using way interleaving techniques. In particular, the controller 100 may perform program/read/erase operations for different ways in a temporally overlapping manner, thus enabling parallel execution of commands for one way while an internal operation for another way is in progress. Consequently, the utilization efficiency of a single channel increases, and the overall throughput and input/output performance improve. For example, while the non-volatile memory NVM11 connected to the way WAY11 is performing a program operation or a read operation, the controller 100 may transmit the command CMDa, the address ADDRa, and the data DATAa to the non-volatile memory NVM12 connected to the way WAY12 via the first channel CH0, or may receive the data DATAa from the non-volatile memory NVM12.

According to embodiments, each of a plurality of non-volatile memories NVM11 to NVM2n may include an internal queue circuit and may support the command queuing operation by utilizing the internal queue circuit. Specifically, each of the plurality of non-volatile memories NVM11 to NVM2n may enqueue a plurality of commands into the internal queue circuit in response to queuing commands received from the controller 100, and may concurrently perform memory operations corresponding to the enqueued commands in response to the merge command received from the controller 100. The controller 100 may merge at least two commands by utilizing the command queuing operations of the plurality of non-volatile memories NVM11 to NVM2n, and may remove the merged command from the command queue, thereby efficiently managing command queue resources.

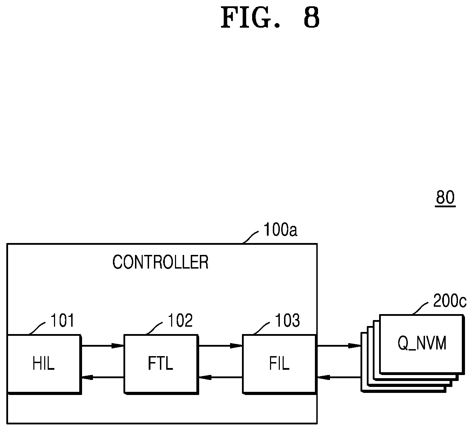

FIG. 8 is a schematic block diagram illustrating a storage device 80 according to embodiments.

Referring to FIG. 8, the storage device 80 may include a controller 100a and a plurality of non-volatile memories 200c. Each of the plurality of non-volatile memories 200c may support a command queuing operation and may be thus referred to as a queue non-volatile memory Q_NVM. The controller 100a may include a host interface layer 101 (hereinafter referred to as the 'HIL 101'), a flash translation layer 102 (hereinafter referred to as the 'FTL 102'), and a flash interface layer 103 (hereinafter referred to as the 'FIL 103'). The controller 100a corresponds to an example of the controller 100 of FIG. 1, and the host interface circuit 110 may be included in the HIL 101. The command queue circuit 120 and the queue manager circuit 130 may be included in the FTL 102, and the non-volatile memory interface circuit 140 may be included in the FIL 103.

The HIL 101 is a layer responsible for the interface between the storage device 80 and the host, and may receive a command, an address, data, and a control signal transmitted from the host and convert the same into a format suitable for an internal processing structure. The HIL 101 may perform command receiving, command parsing, queue management, and direct memory access (DMA) configuration according to host interface protocols (e.g., NVMe, UFS, PCIe, etc.), and may transmit program/read operations requested by the host to the FTL 102 and the FIL 103. In addition, the HIL 101 may manage internal command queue generation and resource allocation based on information, such as the queue ID of the host or priority, thereby ensuring high-performance input/output processing and parallelism.

The FTL 102 may perform address mapping for maintaining and updating a mapping table that converts a logical address to a physical address, wear leveling for extending memory lifespan by preventing intensive use of specific blocks, garbage collection for securing free blocks by moving valid data and erasing blocks, and defective block management for managing defective blocks and allocating replacement blocks. In the embodiment, the FTL 102 may maximize processing efficiency by appropriately rearranging host requests via queue scheduling. Specifically, the FTL 102 may determine the optimal physical location according to internal processing policies based on command information received from the HIL 101, and then forward the request to the FIL 103 to enable actual memory access.

The FIL 103 is a layer that forwards memory access requests received from the FTL 102 to an actual non-volatile memory 200c, and may control the operation according to the detailed protocol and timing of the non-volatile memory 200c. Specifically, the FIL 103 may generate and transmit commands to the non-volatile memory 200c and control the timing of control signals, such as command latch enable (CLE), address latch enable (ALE), chip enable bar (CEB), read enable bar (REB), write enable bar (WEB), and DQS. As described above, the FIL 103 is the lowest layer for directly managing the physical characteristics and timing constraints of the non-volatile memory 200c, and may perform the requests from the FTL 102 and HIL 101 at the actual hardware level.

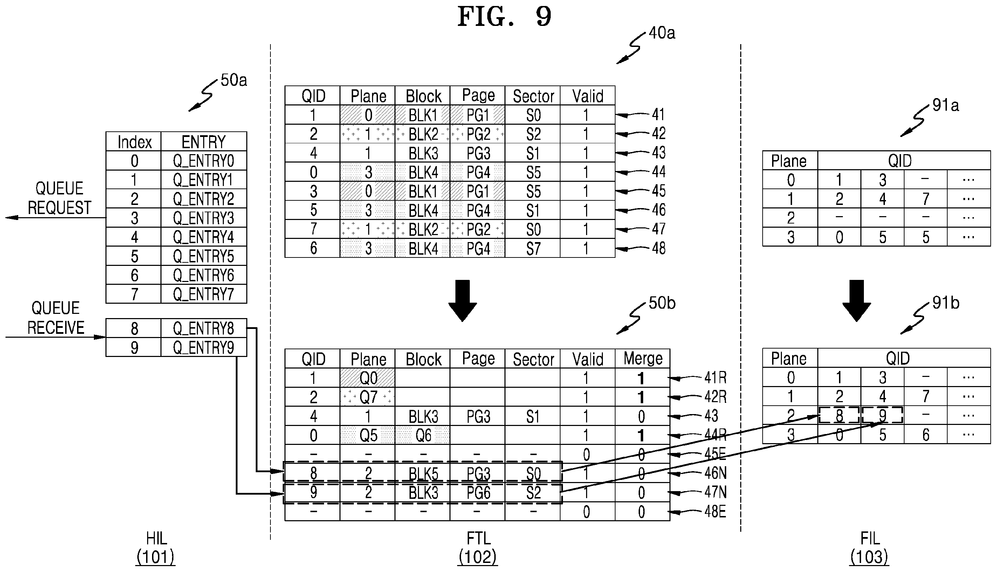

FIG. 9 illustrates the operation of the controller 100a according to embodiments.

Referring to FIGS. 8 and 9 together, the HIL 101 may generate the queue entry table 50a based on the plurality of commands received from the host. For an operation requiring retry, information may be reconstructed from the queue entry table 50a of the HIL 101 based on the queue ID QID. The FTL 102 may generate the original resource 40a including the plurality of queues 41 to 48 based on the queue entries Q_ENTRY0 to Q_ENTRY7 received from the HIL 101. The FTL 102 may select some queues based on the physical addresses of the plurality of queues 41 to 48, merge at least one selected queue into the representative queue, and release the merged queue from the command queue, thereby securing the command queue resource.

The HIL 101 may provide the host with information about the secured command queue resources, and then receive additional commands from the host to update the queue entry table 50a with the queue entries Q_ENTRY8 and Q_ENTRY9. The FTL 102 may generate the updated resource 50b by updating the command queues with new queues 46N and 47N based on the queue entries Q_ENTRY8 and Q_ENTRY9 in the updated queue entry table 50a.

The FTL 102 performs address mapping functions for converting logical addresses received from the host into physical addresses of the non-volatile memory 200c. To this end, the FTL 102 may include an address mapping table that stores mapping information for plane, block, page, and sector units. In addition, the FTL 102 may analyze the logical address range corresponding to each command, i.e., each queue ID QID, to determine the physical location to which the command is to access, and may provide the result to the FIL 103.

The FIL 103 may determine a command for a specific plane or block based on the physical address information provided by the FTL 102, and transmit that command to the non-volatile memory 200c, thereby performing efficient memory operations in conjunction with the FTL 102. In the embodiment, the FIL 103 may generate a queue table 91a that stores queue IDs QID corresponding to the first to fourth planes P0 to P3, based on the original resource 40a generated by the FTL 102. For example, the FIL 103 may place the corresponding queue ID in First-In, First-Out (FIFO) or linked list per plane, based on the physical address provided by the FTL 102. For example, the FIL 103 may include a scheduler that determines, for each plane, a queue ID QID from which commands are to be transmitted.

The FIL 103 may determine, based on the ready/busy signal received from the non-volatile memory 200c, which commands are to be transmitted to the non-volatile memory 200c. Specifically, when the non-volatile memory 200c is in a busy state, the FIL 103 may transmit a queuing command corresponding to the queue to the non-volatile memory 200c and enqueue the commands in the internal queue circuit 231. Subsequently, when the non-volatile memory 200c is placed in a ready state, the FIL 103 may transmit a queue execution command or a merge command to the non-volatile memory 200c, thereby efficiently initiating memory operations corresponding to the queues enqueued in the non-volatile memory 200c.

The queue IDs QID corresponding to the first plane P0 may be stored in the order of QID1 corresponding to the queue 41 and QID3 corresponding to the queue 45. The queue IDs QID corresponding to the second plane P1 may be stored in the order of QID2 corresponding to queue 42, QID4 corresponding to queue 43, and QID7 corresponding to queue 47. The queue IDs QID corresponding to the fourth plane P3 may be stored in the order of QID0 corresponding to queue 44, QID5 corresponding to queue 46, and QID6 corresponding to queue 48. In this case, since there is no queue corresponding to the third plane P2 among the first to fourth planes P0 to P3, the number of active planes is only three. Although there are a total of four planes, the number of active planes is limited to three, which may cause a degradation in overall IOPS performance.

However, according to embodiments, the HIL 101 may receive additional commands from the host, and the FTL 102 may assign physical addresses corresponding to the additional commands to the third plane P2. For example, the FTL 102 may assign the physical address of the new queue 46N to the third plane P2, BLK5, PG3, and S0, and assign the physical address of the new queue 47N to the third plane P2, BLK3, PG6, and S2. Based on the resource 50b updated in the FTL 102, the FIL 103 may store the queue IDs QID corresponding to the third plane P2 in the order of QID8 corresponding to the new queue 46N and QID9 corresponding to the new queue 47N in a queue table 91b. Accordingly, since the first to fourth planes P0 to P3 may all be activated, the number of active planes increases to four, thereby enhancing overall IOPS performance.

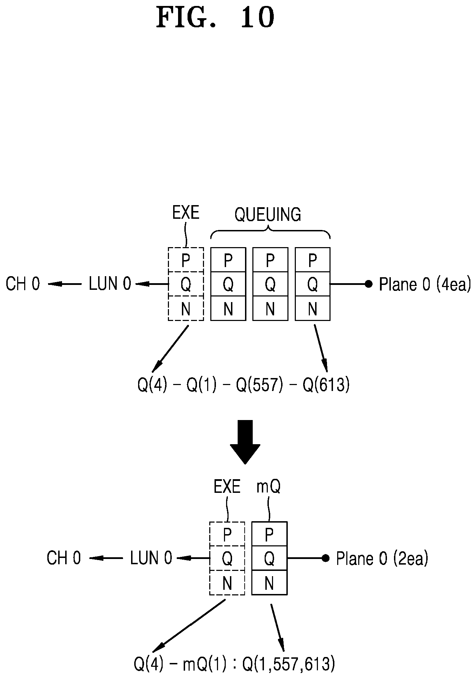

FIG. 10 shows a running queue and an enqueued queue according to embodiments.

Referring to FIGS. 7 and 10 together, the controller 100 may distinguish the running queues from the enqueued queues for the non-volatile memories NVM11 to NVM2n in the memory device 200b, and may merge the enqueued queues. For example, four queues may be allocated to the first plane of LUN0 connected to the first channel CH0. For example, Q(4) is a queue EXE that is running in the non-volatile memory, and Q(1), Q(557), and Q(613) may be queues that are enqueued in the non-volatile memory. In this case, the controller 100 may merge Q(1), Q(557), and Q(613) to generate a merged queue mQ. For example, the merged queue mQ may be a queue in which Q(557) and Q(613) are merged into Q(1). Accordingly, the number of queues allocated to the first plane of LUN0 connected to the first channel CH0 may be reduced to two, and the controller 100 may secure two command queue resources.

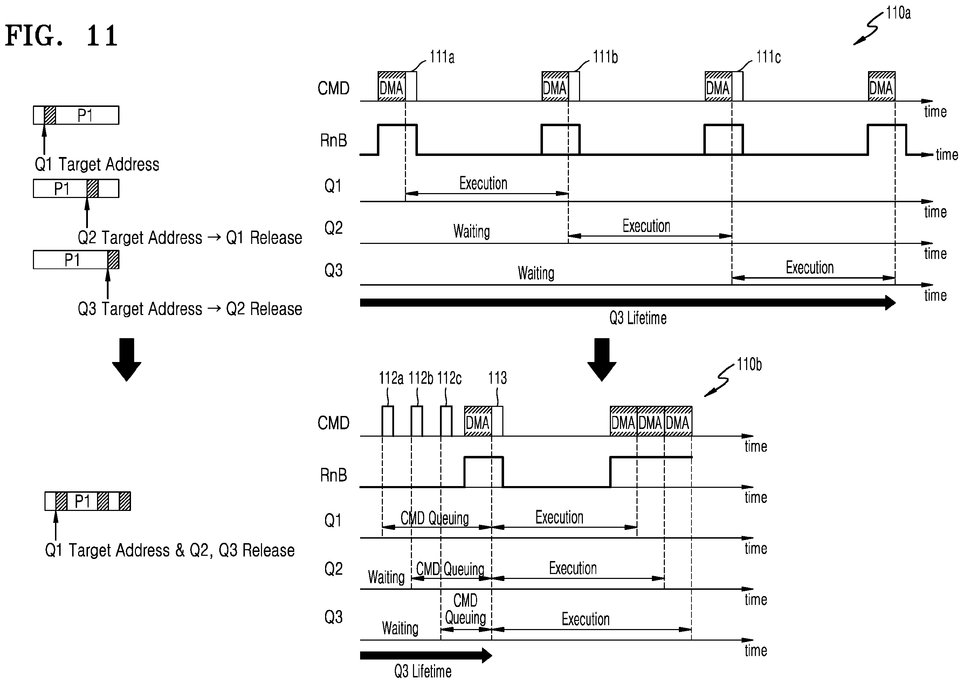

FIG. 11 illustrates a read operation utilizing command queuing and merge execution according to embodiments.

Referring to FIGS. 1 and 11 together, in a comparative example 110a according to the disclosure, sequential read operations may be performed on the non-volatile memory, and the corresponding queue may be released from the command queue resource after each read operation is completed. For example, when the controller sequentially transmits normal read commands 111a to 111c respectively corresponding to queues Q1, Q2, and Q3 for each ready period in the non-volatile memory, the lifetimes of the queues Q2 and Q3 may unnecessarily increase. Also, in this structure, the number of queues that may operate concurrently during a unit time is limited to only one, resulting in restricted parallelism.

However, in embodiments 110b according to the disclosure, the controller 100 may sequentially transmit queuing commands 112a to 112c, corresponding to the queues Q1, Q2, and Q3, respectively, to the non-volatile memory 200 in the busy period of the non-volatile memory 200. Subsequently, the controller 100 may transmit a merge command 113 corresponding to the queues Q1, Q2, and Q3 to the non-volatile memory 200 during the ready period of the non-volatile memory 200. The non-volatile memory 200 may concurrently execute memory operations corresponding to the queues Q1, Q2, and Q3 in response to the merge command 113. Accordingly, the controller 100 may immediately release the queues Q2 and Q3 from the command queue circuit 120, thereby significantly shortening the lifetime of the queues Q2 and Q3 in the command queue circuit 120. Furthermore, in this structure, the number of queues that may operate concurrently during a unit time increases to three, thereby effectively expanding the active bank.

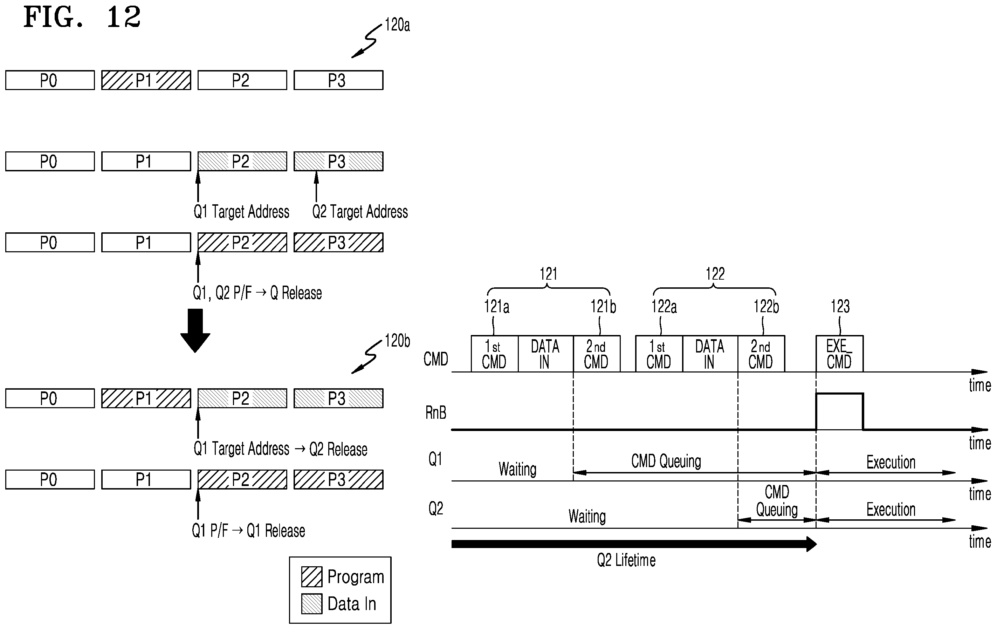

FIG. 12 illustrates a program operation utilizing command queuing and merge execution according to embodiments.

Referring to FIGS. 1 and 12 together, in a comparative example 120a according to the disclosure, sequential program operations may be performed on the non-volatile memory, and the corresponding queue may be released from the command queue resource after each program operation is completed. However, in embodiments 120b according to the disclosure, the controller 100 may sequentially transmit queuing commands 121 and 122, corresponding to the queues Q1 and Q2, respectively, to the non-volatile memory 200 in the busy period of the non-volatile memory 200. For example, the queuing command 121 may correspond to a command set including a first command 121a, a data input, and a second command 121b. For example, the queuing command 122 may correspond to a command set including a first command 122a, a data input, and a second command 122b.

Subsequently, the controller 100 may transmit a merge command or an execution command 123 corresponding to the queues Q1 and Q2 to the non-volatile memory 200 during the ready period of the non-volatile memory 200. The non-volatile memory 200 may execute memory operations corresponding to the queues Q1 and Q2 in response to the merge command or the execution command 123. Accordingly, the controller 100 may immediately release the queue Q2 from the command queue circuit 120, thereby significantly shortening the lifetime of the queue Q2 in the command queue circuit 120.

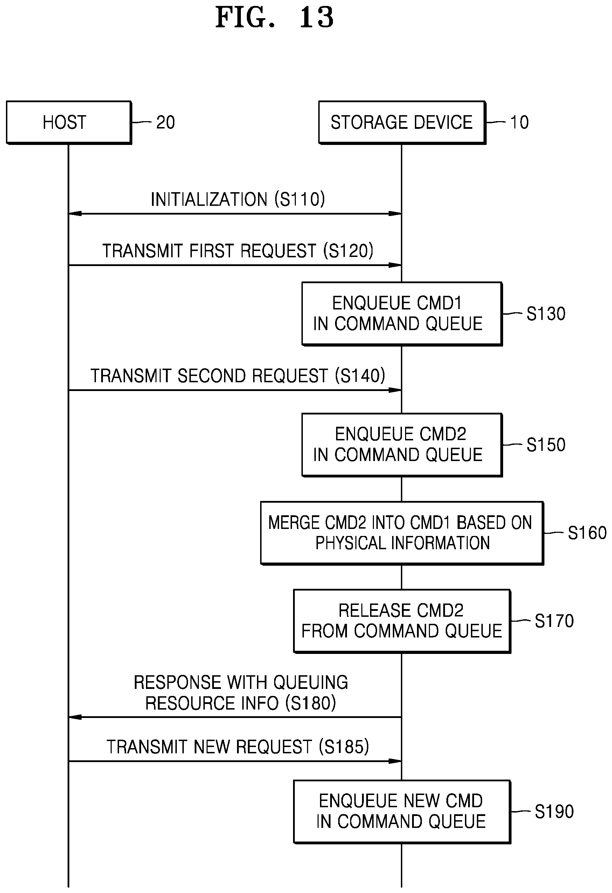

FIG. 13 is a flowchart illustrating the operation between the host 20 and the storage device 10 according to embodiments.

Referring to FIG. 13, in operation S110, initialization operations for the host 20 and the storage device 10 are performed. During the initialization process when the initialization operations are performed, the maximum queue depth for the command queue of the storage device 10 may be identified. For example, during the initialization process, the host 20 may request the maximum queue depth information for the command queue circuit 120 from the storage device 10, and in response thereto, the storage device 10 may transmit the maximum queue depth information to the host 20. For example, the maximum queue depth may correspond to 8 or 16, and the maximum queue depth may vary according to embodiments.

In operation S120, the host 20 transmits a first request to the storage device 10. In operation S130, the storage device 10 enqueues a first command CMD1 corresponding to the first request into the command queue circuit 120. In operation S140, the host 20 transmits a second request to the storage device 10. In operation S150, the storage device 10 enqueues a second command CMD2 corresponding to the second request into the command queue circuit 120. Operations S120 to S150 may be performed repeatedly. The host 20 may sequentially transmit a plurality of requests to the storage device 10 according to the maximum queue depth of the command queue circuit 120.

In operation S160, the storage device 10 merges the second command CMD2 into the first command CMD1 based on the physical addresses (e.g. physical information) corresponding to the first and second commands CMD1 and CMD2. For example, the storage device 10 may utilize the command queuing and merging functions of the non-volatile memory 200 to select the first and second commands CMD1 and CMD2 having concurrently operable physical addresses. For example, the storage device 10 may set the queue corresponding to the first command CMD1 as a representative queue and merge the queue corresponding to the second command CMD2 into the representative queue.

In operation S170, the storage device 10 releases the second command CMD2 from the command queue circuit 120. For example, the queue manager circuit 130 may shorten the lifetime of a queue corresponding to the second command CMD2 in the command queue circuit 120 by releasing the second command CMD2 corresponding to the queue merged into the representative queue. Accordingly, the queue manager circuit 130 may secure the command queue resource by releasing the second command CMD2 from the command queue circuit 120.

In operation S180, the storage device 10 transmits a response including queuing resource information to the host 20. For example, the storage device 10 may transmit, to the host 20, a response including the number of secured command queue resources. In operation S185, the host 20 transmits a new request to the storage device 10. For example, the host 20 may transmit, to the storage device 10, additional commands in a number equal to the number of command queue resources received from the storage device 10. In operation S190, the storage device 10 enqueues a new command corresponding to the new request into the command queue circuit 120. Accordingly, the storage device 10 may efficiently manage the command queue resources by merging commands enqueued in the command queue circuit 120 and removing the merged commands.

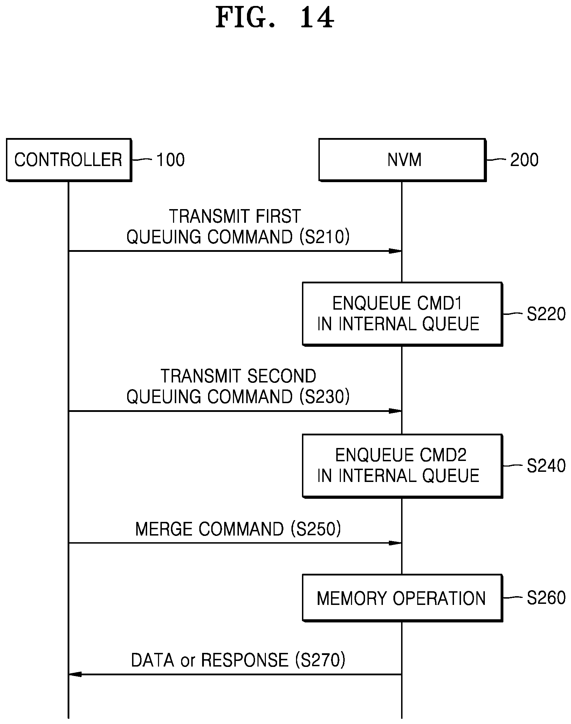

FIG. 14 is a flowchart illustrating operations between the controller 100 and the non-volatile memory 200 according to embodiments.

Referring to FIG. 14, in operation S210, the controller 100 transmits, to the non-volatile memory 200, the first queuing command corresponding to the first queue with respect to the first physical address. In operation S220, the non-volatile memory 200 enqueues the first command CMD1 corresponding to the first queuing command into the internal queue circuit 231. In operation S230, the controller 100 transmits, to the non-volatile memory 200, the second queuing command corresponding to the second queue with respect to the second physical address. In operation S240, the non-volatile memory 200 enqueues the second command CMD2 corresponding to the second queuing command into the internal queue circuit 231.

Operations S210 to S240 may be executed during the busy period of the non-volatile memory 200. According to embodiments, operations S210 to S240 may be performed repeatedly. For example, the first physical address and the second physical address may correspond to the same bank. For example, a bank may include a chip, die, LUN, or plane. For example, the first physical address and the second physical address may correspond to the same plane, the same block, and the same page. For example, the first physical address and the second physical address may correspond to concurrently operable commands.

In operation S250, the controller 100 transmits the merge command corresponding to the first and second queues to the non-volatile memory 200. Herein, the merge command may correspond to a queue execution command that instructs the execution of memory operations corresponding to the first and second queues. Operation S250 may be executed during the ready period of the non-volatile memory 200. In operation S260, in response to the merge command, the non-volatile memory 200 concurrently performs first and second memory operations corresponding to the first command and the second command on the first and second physical addresses, respectively.

In operation S270, the non-volatile memory 200 transmits data or a response to the controller 100 based on the execution results of the memory operations. For example, when the memory operation is a read operation, the non-volatile memory 200 may transmit the read data to the controller 100. For example, when the memory operation is a program operation, the non-volatile memory 200 may transmit a response representing completion of the operation to the controller 100.

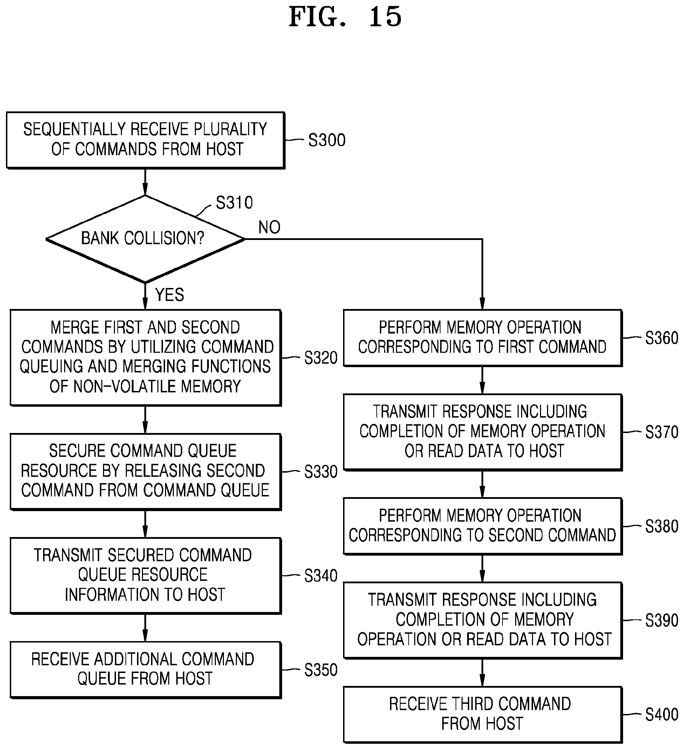

FIG. 15 is a flowchart illustrating a method of operating the storage device 10, according to embodiments.

Referring to FIGS. 1 and 15 together, in operation S300, the storage device 10 sequentially receives a plurality of commands from the host 20. In operation S310, the storage device 10 determines whether a bank collision has occurred. When determined that a bank collision has occurred, in operation S320, the storage device 10 merges the first and second commands by utilizing the command queuing and merging functions of the non-volatile memory 200.

In operation S330, the storage device 10 secures command queue resources by releasing the second command from the command queue circuit 120. In operation S340, the storage device 10 transmits the secured command queue resource information to the host 20. In operation S350, the storage device 10 receives an additional command queue from the host 20.

On the other hand, when determined that a bank collision has not occurred, in operation S360, the storage device 10 performs the first memory operation corresponding to the first command. In operation S370, the storage device 10 transmits, to the host 20, a response including the completion of the memory operation or the read data. In operation S380, the storage device 10 performs a second memory operation corresponding to the second command. In operation S390, the storage device 10 transmits, to the host 20, a response including the completion of the memory operation or the read data. In operation S400, the storage device 10 receives a third command from the host 20.

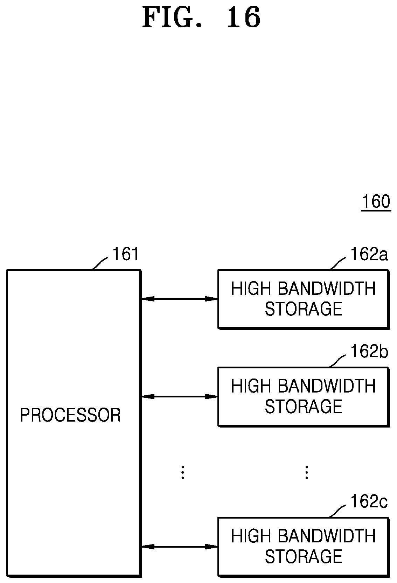

FIG. 16 is a block diagram illustrating a system 160 according to embodiments.

Referring to FIG. 16, the system 160 may include a processor 161 and a plurality of high bandwidth storages 162a to 162c. In some embodiments, the system 160 may correspond to a single package, and the processor 161 and the plurality of high bandwidth storages 162a to 162c may be mounted on an interposer in the single package. In some embodiments, the system 160 may correspond to a single module, and packages each including the processor 161 and the plurality of high bandwidth storages 162a to 162c may be mounted on a board.

The processor 161 may be any component that processes data. For example, the processor 161 may be a processor for executing software code, fixed intellectual property (IP), such as a hardware accelerator, or a reconfigurable component, such as a field programmable gate array (FPGA). Also, the processor 161 may be a component designed for parallel processing, such as a graphics processing unit (GPU) and a neural processing unit (NPU).

The processor 161 may access the plurality of high bandwidth storages 162a to 162c. The processor 161 may store data in the plurality of high bandwidth storages 162a to 162c or read data stored in the plurality of high bandwidth storages 162a to 162c. In some embodiments, each of the plurality of high bandwidth storages 162a to 162c may correspond to the storage device or the memory device described with reference to FIGS. 1 to 15, and when including flash memory, the high bandwidth storage may be referred to as high bandwidth flash (HBF). The memory devices in the plurality of high bandwidth storages 162a to 162c may not only have wide input/output but also provide a plurality of channels. Also, the memory device may support various modes. Accordingly, the plurality of high bandwidth storages 162a to 162c may provide high bandwidth and flexibility to the processor 161, thereby enhancing the performance of the system 160.

In some embodiments, the storage devices 10, 70, and 80 described above may include at least one of an SSD, embedded memory, and detachable external memory. When the storage devices 10, 70, and 80 are SSDs, the storage devices 10, 70, and 80 may comply with the NVMe standard. When the storage devices 10, 70, and 80 are embedded memory or external memory, the storage devices 10, 70, and 80 may comply with the universal flash storage (UFS) or embedded multi-media card (eMMC) standards.

In some embodiments, the storage devices 10, 70, and 80 described above may further include a computing device that performs data processing on data received from the host, thereby performing tasks assigned by the host. For example, the computing device may perform various neural network-based tasks, such as a convolution neural network (CNN), a region with convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a fully convolutional network, a long short-term memory (LSTM) network, and a classification network.

For example, the computing device may be implemented as a GPU, a digital signal processor (DSP), a field programmable gate array (FPGA), an application specific integrated circuit (ASIC), or an NPU. However, the disclosure is not limited thereto, and the computing device may be implemented as various types of accelerators that perform data processing required for executing assigned tasks in parallel, such as data operations (e.g., arithmetic operations, convolution operations, pooling operations, etc.).

While the disclosure has been particularly shown and described with reference to embodiments thereof, it will be understood that various changes in form and details may be made therein without departing from the scope of the following claims.

## Claims

1. A storage device (10) comprising:
non-volatile memory (200); and
a controller (100) configured to control the non-volatile memory (200),
wherein the controller (100) comprises:
a command queue circuit (120) configured to store a plurality of queues respectively corresponding to a plurality of commands received from a host (20);
a queue manager circuit (130) configured to, based on physical addresses (PA) of the plurality of queues:
select a first queue corresponding to a first physical address (PA) and a second queue corresponding to a second physical address (PA), and
merge the second queue into the first queue; and
a non-volatile memory interface circuit (140) configured to sequentially transmit, to the non-volatile memory (200):
a first queuing command corresponding to the first queue,
a second queuing command corresponding to the second queue, and
a merge command corresponding to the first and second queues,
wherein the non-volatile memory (200) is configured to, in response to the merge command, concurrently perform a first memory operation corresponding to the first physical address (PA) and a second memory operation corresponding to the second physical address (PA).

2. The storage device of claim 1, wherein the queue manager circuit (130) is configured to, based on a merge operation of merging the second queue into the first queue, release the second queue from the command queue circuit (120).

3. The storage device of claim 2, wherein the controller (100) further comprises a host interface circuit (110) configured to, based on the controller (100) releasing the second queue from the command queue circuit (120), transmit a request for an additional command to the host (20).

4. The storage device of any preceding claim, wherein the queue manager circuit (130) is configured to set the first queue as a representative queue of the first queue and the second queue by merging the second queue into the first queue, and to set a merge flag (MF) corresponding to the representative queue to a first value.

5. The storage device of claim 4, wherein the representative queue having the merge flag (MF) set to the first value comprises information about the second queue, and
the plurality of queues further comprises a general queue having the merge flag (MF) set to a second value different from the first value and the general queue comprises a physical address (PA) corresponding to the general queue.

6. The storage device of any preceding claim, wherein the non-volatile memory (200) comprises a plurality of banks, and
the first and second physical addresses (PA) correspond to a first bank among the plurality of banks.

7. The storage device of claim 6, wherein the plurality of banks respectively comprise a plurality of planes (PL), a plurality of dies, or a plurality of chips.

8. The storage device of any preceding claim, wherein the non-volatile memory (200) comprises an internal queue circuit (231), and
the non-volatile memory (200) is configured to:
in response to the first queuing command, store, in the internal queue circuit (231), a first command corresponding to the first queue;
in response to the second queuing command, store, in the internal queue circuit (231), a second command corresponding to the second queue; and
in response to the merge command, concurrently perform the first memory operation corresponding to the first command and the second memory operation corresponding to the second command.

9. The storage device of claim 8, wherein the first and second commands correspond to read commands, and
the non-volatile memory (200) is configured to, in response to the merge command, perform read operations on the first and second physical addresses (PA).

10. The storage device of claim 8, wherein the first and second commands correspond to program commands, and
the non-volatile memory (200) is configured to, in response to the merge command, perform program operations on the first and second physical addresses (PA).

11. The storage device of any preceding claim, wherein the first and second physical addresses (PA) correspond to a same plane (PL), a same block, and a same page of the non-volatile memory (200).

12. A controller (100) comprising:
a command queue circuit (120) configured to store a plurality of queues respectively corresponding to a plurality of commands received from a host (20);
a queue manager circuit (130) configured to:
based on physical addresses (PA) of the plurality of queues, merge a first queue and a second queue, and set the first queue as a representative queue, and
release the second queue from the command queue circuit (120); and
a host interface circuit (110) configured to:
based on a release operation of releasing the second queue from the command queue circuit (120), transmit a request for an additional command to the host (20), and
subsequently receive the additional command from the host (20),
wherein the command queue circuit (120) is configured to further store the additional command received from the host (20).

13. The controller of claim 12, further comprising a non-volatile memory interface circuit (140) configured to sequentially transmit, to non-volatile memory (200):
a first queuing command corresponding to the first queue,
a second queuing command corresponding to the second queue, and
a merge command corresponding to the first and second queues.

14. The controller of claim 13, wherein the first queue corresponds to a first physical address (PA) of the non-volatile memory (200) and the second queue corresponds to a second physical address (PA) of the non-volatile memory (200),
the queue manager circuit (130) is configured to merge the first queue and the second queue, and
the first and second physical addresses (PA) correspond to a same plane (PL), a same block, and a same page of the non-volatile memory (200).

15. The controller of claim 12, 13 or 14, wherein the queue manager circuit (130) is configured to set the first queue as a representative queue by merging the second queue into the first queue, and to set a merge flag (MF) corresponding to the representative queue to a first value.
